(19) **Europäisches Patentamt / European Patent Office / Office européen des brevets**

(11) **EP 3 143 349 B1**

(12) # FASCICULE DE BREVET EUROPEEN

(45) Date de publication et mention de la délivrance du brevet:
**27.08.2025 Bulletin 2025/35**

(21) Numéro de dépôt: **15725823.7**

(22) Date de dépôt: **05.05.2015**

(51) Classification Internationale des Brevets (IPC):
**F25J 1/00** *(2006.01)* **F25J 1/02** *(2006.01)*
**F17C 5/04** *(2006.01)*

(52) Classification Coopérative des Brevets (CPC):
**F25J 1/0022; F25J 1/004; F25J 1/0052;**
**F25J 1/0212; F25J 1/0219; F25J 1/0254;**
F25J 2230/30; F25J 2230/60; F25J 2245/90;
F25J 2290/62; Y02E 50/30

(86) Numéro de dépôt international:
**PCT/FR2015/051191**

(87) Numéro de publication internationale:
**WO 2015/173491 (19.11.2015 Gazette 2015/46)**

(54) **PROCÉDÉ ET DISPOSITIF DE LIQUÉFACTION DU MÉTHANE**

VERFAHREN UND VORRICHTUNG ZUR VERFLÜSSIGUNG VON METHAN

METHOD AND DEVICE FOR LIQUEFYING METHANE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **14.05.2014 FR 1454275**

(43) Date de publication de la demande:
**22.03.2017 Bulletin 2017/12**

(73) Titulaire: **Cryo Pur**
**91300 Massy (FR)**

(72) Inventeurs:
- **CLODIC, Denis**
  **91120 Palaiseau (FR)**

- **TOUBASSY, Joseph**
  **91120 Palaiseau (FR)**

(74) Mandataire: **Demulsant, Xavier**
**Dejade & Biset**
**8 Avenue Jean Bart**
**95000 Cergy (FR)**

(56) Documents cités:
WO-A2-2010/128467 WO-A2-2015/025096
DE-A1- 1 501 757 US-A- 5 036 671
US-A1- 2012 036 888 US-A1- 2012 060 553
US-A1- 2013 180 282 US-A1- 2013 192 297
US-B1- 6 427 483

- **FLUEGGEN E ET AL: "PRESSURISED LNG - AND THE UTILISATION OF SMALL GAS FIELDS",** LNG/LPG CONFERENCE, XX, XX, 7 November 1978 (1978-11-07), pages 195 - 204, XP001055302

**Description**

L'invention a trait au domaine de la liquéfaction et du remplissage du méthane dans un réservoir de transport.

Le gaz naturel et le bio méthane contiennent essentiellement du méthane. Le premier est issu de l'industrie extractive tandis que l'autre provient de la fermentation des déchets.

Pour l'un comme pour l'autre, le méthane gazeux est liquéfié afin d'améliorer la densité énergétique du flux de méthane en vue de son transport. La liquéfaction du gaz naturel fossile est effectuée dans des unités de cryogénisation où la température du méthane est abaissée à une valeur inférieure à -161°C à la pression atmosphérique. Le méthane ainsi liquéfié est transportable sur de longues distances par bateau pour un coût réaliste.

Les pertes thermiques rendent impossible le maintien en permanence du méthane à l'état liquide sous sa pression initiale. C'est ainsi qu'une partie du méthane se vaporise et la pression dans le réservoir où le méthane est stocké augmente en conséquence. Il est donc nécessaire de gérer la montée en pression dans le réservoir. La solution consiste alors à extraire le méthane évaporé du réservoir. Le méthane extrait peut être brulé, à nouveau liquéfié ou servir de combustible pour alimenter diverses turbines. Cette problématique fait l'objet d'une littérature abondante.

La demande de brevet américain n° 2013/0192297 (JOHN MAK) présente une unité de liquéfaction. Le flux de gaz arrive à une pression de 31 bar, celui-ci est décontaminé puis traverse un échangeur thermique et est stocké dans un réservoir à une température de -141°C et à une pression voisine de 4,1 bar. Dans le réservoir, la fraction de gaz qui s'évapore est pré-refroidie avant de rejoindre le flux de gaz entrant. Le gaz liquéfié dans le réservoir est ensuite injecté dans des camions de transports à une pression de 4,1 bar.

La demande de brevet australien n° 2006241566 (SINGLE BUOY MOORINGS) décrit un dispositif de remplissage de gaz liquéfié dans un navire de transport communément appelé méthanier. Depuis une station on-shore, le gaz liquéfié est amené vers le méthanier à une pression dans les pipelines de 1 bar. Ce document s'intéresse particulièrement à la fraction de méthane qui s'évapore dans les pipelines compte tenu de la longueur de ces pipelines, des pertes de charges et des pertes thermiques. Ce document décrit, notamment, un dispositif permettant de renvoyer le méthane s'étant vaporisé dans les pipelines vers l'unité on-shore.

Ces documents ne songent aucunement à la consommation énergétique de ces dispositifs. Le remplissage à ces pressions nécessite que le méthane soit maintenu à une basse température dans les réservoirs.

Les pressions de remplissage communément utilisées dans l'industrie impliquent de refroidir le gaz jusqu'à de très basses températures. Par exemple, à la pression atmosphérique le méthane est stocké à une température inférieure à -161°C et à 4,1 bar celui-ci est maintenu à une température inférieure à -141°C. Or, les systèmes de refroidissement qui alimentent les échangeurs thermiques sont extrêmement énergivores. Un moyen pour lutter contre une consommation d'énergie excessive serait de liquéfier le gaz à une température supérieure que celles précitées.

Le document US2012/036888 décrit la production de méthane dans un état particulier (CCNG), à une pression très élevée, supérieure à 45 bar, la pression étant supérieure la pression au point critique, la température étant inférieure à la température au point critique. Le procédé décrit dans ce document de l'art antérieur utilise une source de gaz naturel à pression d'au moins 60 psia (4.1 bars) et une température d'au moins 60°F (15°C), avec une composition d'environ 95% de méthane, le reste étant de l'azote et du dioxyde de carbone.

L'objectif est de proposer une solution qui permette de liquéfier le méthane et de le transporter en optimisant la consommation énergétique de l'installation.

A cet effet, il est proposé en premier lieu un procédé de liquéfaction de méthane et de remplissage d'un réservoir de transport au moyen du méthane liquéfié selon la revendication 1.

Il est proposé en deuxième lieu, un dispositif de liquéfaction de méthane et de remplissage d'un réservoir selon la revendication 2, le dispositif présentant avantageusement les caractéristiques des revendications 3 et 4.

D'autres objets et avantages de l'invention apparaîtront à la lumière de la description d'un mode de réalisation, faite ci-après en référence aux dessins annexés dans lesquels :

- la figure 1 est une représentation schématique d'un dispositif de liquéfaction et de remplissage de méthane ;
- la figure 2 est un diagramme Pression - enthalpie, la pression y étant représentée en échelle logarithmique ;
- la figure 3a représente la variation de puissance électrique nécessaire en kW pour 100 normaux mètres cube de méthane par heure à une température initiale d'environ -100°C en fonction d'une pression de transport donnée et de la pression de liquéfaction. Chaque courbe correspond à une pression de transport tandis que l'ordonnée et l'abscisse correspondent respectivement à la puissance électrique et à la pression de liquéfaction ;
- la figure 3b est similaire à la figure 3a, à la différence que le méthane est initialement à température ambiante.

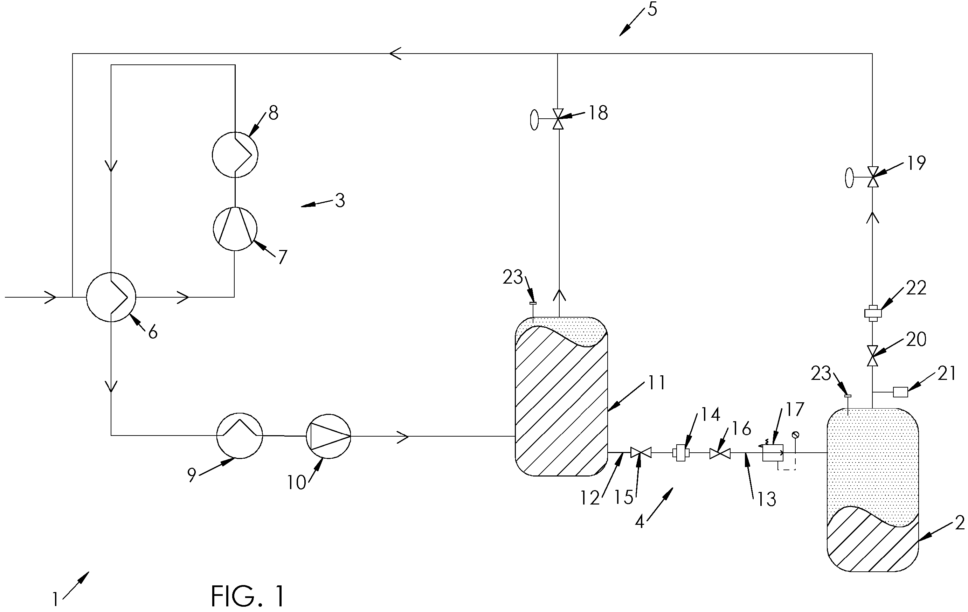

Sur la figure 1 est représenté schématiquement un dispositif 1 de liquéfaction de méthane et de remplissage d'un réservoir 2 de transport. Ce réservoir 2 de transport peut se présenter sous différentes formes à savoir un camion citerne, des silos mobiles ou encore un navire méthanier.

Dans un mode de réalisation représenté sur la figure 1, le dispositif **1** comprend :

- un circuit **3** de liquéfaction du méthane initialement gazeux,
- un circuit **4** de remplissage du méthane liquéfié dans le réservoir **2** de transport,
- un circuit **5** de réinjection d'une fraction gazeuse du méthane dans le circuit **3** de liquéfaction.

Le circuit **3** de liquéfaction comprend dans l'ordre de passage du gaz (représenté sur la figure 1 par des flèches), un premier échangeur **6** thermique, un compresseur **7,** un deuxième échangeur **8** thermique, un échangeur **9** de liquéfaction et une pompe **10.** Le circuit **3** de liquéfaction comprend également un réservoir **11** tampon. Le réservoir **11** tampon est destiné à stocker le méthane liquéfié et à maintenir un flux dans le dispositif **1** lorsque le réservoir **2** de transport est rempli.

Le circuit **4** de remplissage prend source dans le réservoir **11** tampon et achemine le méthane liquéfié jusqu'au réservoir **2** de transport.

Le circuit **4** de remplissage comprend une première partie **12** et une deuxième partie **13** connectées entre elles grâce à un raccord **14** d'injection. Les première et deuxième parties **12, 13** comprennent respectivement une première vanne **15** d'arrêt et une deuxième vanne **16** d'arrêt. Ces vannes **15, 16** d'arrêt permettent, lorsque le raccord **14** d'injection est déverrouillé, d'interrompre les flux de méthane provenant d'une part du réservoir **11** tampon et d'autre part du réservoir **2** de transport. La deuxième partie **13** comprend en outre un détendeur **17** permettant d'abaisser la pression du méthane liquéfié en sortie du réservoir **11** tampon.

Le circuit **5** de réinjection relie le réservoir **11** tampon et le réservoir **2** de transport à l'entrée du circuit **3** de liquéfaction. Ainsi la fraction de méthane se vaporisant dans le réservoir **11** tampon et dans le réservoir **2** de transport est récupérée et acheminée vers le circuit **3** de liquéfaction pour être à nouveau traitée. Le réservoir **11** tampon comprend un manomètre ou capteur de pression (non représenté). Ce manomètre est relié à une unité informatique (non représentée). Ainsi lorsque la pression dans le réservoir **11** tampon est, pour une raison ou une autre, trop élevée l'unité informatique commande la détente de la pression dans le réservoir **11** tampon.

Le circuit **5** de réinjection relie le réservoir **11** tampon et le réservoir **2** de transport au circuit **3** de liquéfaction. Le circuit **5** de réinjection comprend d'une part un détendeur **18** de régulation situé en aval du réservoir **11** tampon et d'autre part une électrovanne **19** de réinjection, une vanne **20** et un manomètre **21** (ou capteur de pression) situés en aval du réservoir **2** de transport. L'électrovanne **19** de réinjection est manipulée par un actionneur (non représenté) lequel est également piloté par une unité informatique (non représentée). Un raccord **22** de réinjection permet de séparer le réservoir **2** de transport du circuit **5** de réinjection. Les vannes **19, 20** sont agencées de sorte à bloquer tout flux de méthane hors du réservoir **2** de transport et hors du circuit **5** de réinjection lorsque le raccord **22** de réinjection est déverrouillé. Le réservoir **11** tampon est alimenté en permanence par le circuit **3** de liquéfaction, la pression y varie de manière légèrement croissante du fait des apports thermiques à travers l'isolation du réservoir **11** tampon. Le détendeur **18** de régulation permet de réguler la pression dans le réservoir **11** tampon. Cette régulation se fait en libérant la fraction de méthane vaporisée due aux pertes thermiques dans le réservoir **11** tampon, ce méthane gazeux est renvoyé vers le circuit **3** de liquéfaction.

Dans ce qui suit, le procédé de liquéfaction sera décrit étape par étape. Ce procédé comprend :

- une étape de liquéfaction du méthane avec compression de celui-ci et remplissage du réservoir **11** tampon,

- une étape de détente de la pression du méthane en sortie du réservoir **11** tampon vers le réservoir **2** de transport.

Au cours de l'étape de liquéfaction, le méthane gazeux arrive dans le dispositif **1** à une température voisine de -100°C et entre dans le premier échangeur **6** thermique où celui-ci est réchauffé jusqu'à une température d'environ 20 °C. Le méthane gazeux entre, ensuite, dans un compresseur **7** afin d'être comprimé à une pression de 15 bar. Le compresseur **7** a une température de refoulement voisine de 80°C car celui-ci est refroidi. Le méthane en sortie du compresseur **7** est donc à une pression de 15 bar et à une température de 80°C. Le méthane est refroidi jusqu'à une température de 20°C dans un deuxième échangeur **8** thermique. Le méthane traverse alors à nouveau le premier échangeur **6** thermique où sa température est abaissée à -90°C. Le méthane est à ce stade encore à l'état gazeux. Celui-ci est liquéfié dans l'échangeur **9** de liquéfaction, où il est refroidi à une température de saturation voisine de -114°C correspondant à la pression de saturation de 15 bar. Le méthane liquéfié est alors stocké dans le réservoir **11** tampon à une pression de 15 bar et une température de - 114 °C.

Le réservoir **2** de transport est alors rempli en méthane liquéfié à partir du réservoir **11** tampon à une pression de transport. Typiquement, la pression de transport est comprise entre 1 et 8 bar, or la pression dans le réservoir **11** tampon est d'environ 15 bar. Le méthane liquéfié est acheminé du réservoir **11** tampon vers le réservoir **2** de transport par l'intermédiaire du circuit **4** de remplissage. Dans le circuit **4** de remplissage, la pression du méthane liquéfiée (15 bar) est abaissée jusqu'à la pression de transport (comprise entre 1 et 8 bar) grâce au détendeur **17.** Ainsi le réservoir **2** de transport est rempli en méthane liquéfié à la pression de transport.

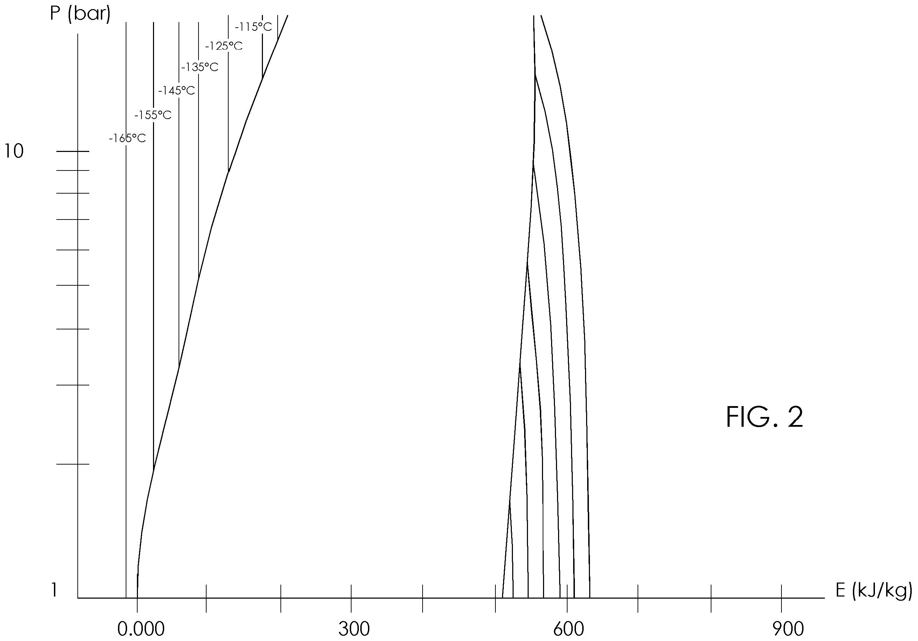

La relation pression et température de saturation est présentée par le diagramme Pression - enthalpie illustré sur la figure 2. A une pression de 15 bar, la température de saturation du méthane avoisine les -114°C.

Il est à noter que les fluides réfrigérant ne sont pas identiques dans chacun des échangeurs thermiques. Le premier échangeur **6** thermique est refroidi par le flux de méthane gazeux entrant dans le dispositif **1**. Le méthane étant initialement à une température voisine de -100°C, cette température est exploitée pour refroidir le méthane provenant du deuxième échangeur **8** thermique. Le deuxième échangeur **8** thermique a de l'eau comme fluide réfrigérant. L'échangeur **9** de liquéfaction utilise un mélange d'hydrocarbure comme réfrigérant. Ces fluides sont particulièrement efficaces dans l'industrie cryogénique, compte tenu de leurs températures de changement de phase.

Dans le réservoir **11** tampon, une fraction de méthane se vaporise continuellement compte-tenu des pertes thermiques. Cette fraction gazeuse est renvoyée vers le circuit **3** de liquéfaction par l'intermédiaire du circuit **5** de réinjection entretenant ainsi un flux de gaz dans le dispositif **1**.

Parallèlement, le réservoir **2** de transport est rempli à partir du réservoir **11** tampon à la pression de transport inférieure à 8 bar. Au fur et à mesure que le réservoir de transport se rempli, la vanne **19** régule la pression dans le réservoir **2** de transport afin de la maintenir à la pression souhaitée. Ceci permet de ne pas entraver le passage du méthane entrant dans le réservoir **2** de transport tout en garantissant la sécurité de l'installation. Le réservoir **2** de transport et le réservoir **11** tampon comprennent une soupape **23** de sécurité se déclenchant lorsque la pression interne dans les réservoirs atteint un seuil prédéterminé et jugé critique pour l'installation. Les soupapes **23** sont reliées à une torchère non représentée.

Lorsque le réservoir **2** de transport est rempli, les vannes **15, 16** d'injection sont fermées et les vannes **19, 20** continuent de réguler pendant un laps de temps si nécessaire la pression dans le réservoir **2** de transport. Lorsque cette pression est conforme à la pression de transport souhaitée (indication donnée par le manomètre **21**), les vannes **19, 20** sont fermées à leur tour et les raccords **14, 22** sont déverrouillés. Le réservoir **2** de transport peut alors être remplacé par un réservoir vide.

Le fait de liquéfier le méthane à des pressions supérieures à celles du transport permet une économie d'énergie substantielle. La température de saturation du méthane à une pression de 15 bar est supérieure à celle qui est à une pression de 4 bar par exemple. Ainsi pour maintenir le méthane à l'état liquide, moins d'énergie est nécessaire car la température de liquéfaction est plus élevée. Il apparaît en effet qu'augmenter la pression dans le circuit **3** de liquéfaction est moins énergivore qu'abaisser la température dans ce même circuit.

Ce constat est validé par une série de calculs que nous présentons ci-dessous. Les données thermodynamiques du méthane fournies dans les calculs sont données par le logiciel Refprop 9® développé et commercialisé par le National Institute of Standards and Technology (NIST).

Au cours de la liquéfaction, la compression du méthane gazeux et son refroidissement à une température cryogénique sont les opérations les plus consommatrices en termes d'énergie.

Nous allons donc comparer une liquéfaction d'un méthane porté à 15 bar et d'un méthane comprimé à 4 bar.

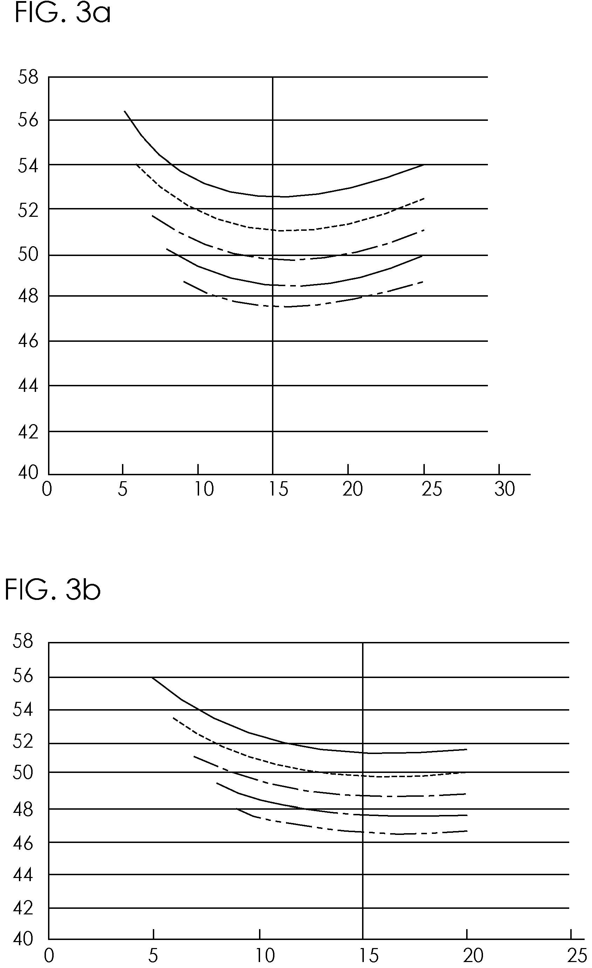

La valeur 15 bar n'est pas choisie de manière arbitraire. Cette valeur est le fruit de calculs mis en œuvre par la demanderesse. Les courbes des figures 3a et 3b représentent la variation de puissance électrique nécessaire pour 100 normaux mètres cube de méthane par heure en fonction des pressions de transport et de liquéfaction. La figure 3a présente cette variation de puissance pour un méthane à une température de -100°C tandis que la figure 3b s'applique à un méthane à température ambiante. Une étude a été menée sur un méthane à - 100°C car en sortie des unités de décontamination du méthane et avant d'entrer dans les unités de liquéfaction celui-ci est sensiblement à cette température. La puissance électrique représentée sur les figures 3a et 3b réunie pour une unité de masse de méthane à liquéfier :

- la puissance électrique de la compression du méthane initialement à 1 bar jusqu'à une pression de liquéfaction pour un rendement du compresseur **7** de 0,8,

- la puissance électrique nécessaire à la liquéfaction en prenant un coefficient de performance (COP) du système frigorifique de 30% à 40% par rapport au COP idéal de Carnot,

- la puissance électrique nécessaire à la reliquéfaction de la fraction évaporée de méthane au moment où celui-ci est détendu pour atteindre la pression de transport inférieure à 8 bar.

Sur les figures 3a, 3b la courbe en trait :

- *continu* correspond à une pression de transport de 4 bar,
- *pointillé* correspond à une pression de transport de 5 bar,
- *mixte* correspond à une pression de transport de 6 bar,
- *mixte long* correspond à une pression de transport de 7 bar,
- *mixte et tiret* correspond à une pression de transport de 8 bar.

Comme on peut le voir sur les figures 3a, 3b un optimum est visible à l'abscisse 15 bar. La puissance consommée est donc minimale à une pression de liquéfaction d'environ 15 bar. Ceci quelle que soit la pression de transport pour une température initiale du méthane de - 100°C ou à température ambiante.

Le méthane comprimé à 4 bar se liquéfie à une température de 131 K. Pour liquéfier le méthane, le système frigorifique utilise un fluide frigorigène à une température évidemment inférieure à la température de liquéfaction du méthane. Nous prenons l'exemple d'un fluide frigorigène à une température de 126 K. Nous considérons la température de condensation du système à 20 °C soit 293 K en prenant des conditions climatiques normales de 15 °C. Dans les calculs qui vont suivre, les valeurs sont arrondies.

Nous calculons le coefficient de performance COP :

$$COP = \frac{126}{293 - 126} = 0,75$$

La liquéfaction se fait donc idéalement avec un système frigorifique ayant un COP égal à 0,75. En prenant un COP du système frigorifique de 30% par rapport au COP idéal, nous calculons un COP de 0,23.

Dans le dispositif décrit, le méthane étant à -90°C soit 163 K initialement doit passer en dessous de -142°C soit 131 K. L'énergie nécessaire est de 100 kJ / kg $_{méthane}$ (figure 2). Il doit être ajouté à cette valeur l'enthalpie de changement d'état du méthane à la pression de 4 bar et qui vaut 468,4 kJ / kg $_{méthane}$ (figure 2). La liquéfaction peut, donc, se faire avec une enthalpie totale de 568,4 kJ / kg $_{méthane}$.

La consommation électrique nous est donnée en divisant l'enthalpie par le COP soit :

$$\frac{568,4}{0,23} = 2511\ kJ_{électrique}/kg_{méthane}$$

La compression de 1 à 4 bar nécessite quant à elle une énergie de 183 kJ$_{électrique}$ / kg $_{méthane}$. Ce qui fait au total une consommation électrique de 2694 kJ $_{électrique}$ / kg $_{méthane}$.

Nous prenons, maintenant, l'exemple d'une liquéfaction à une pression de 15 bar.

La température de liquéfaction du méthane à 15 bar est de -114 °C soit 159 K. Dans les mêmes conditions climatiques que précédemment, le COP est donné par la relation suivante :

$$\frac{154}{293 - 154} = 1,11$$

Ceci nous donne un COP réel de 0,33. Le refroidissement de -90°C soit 183 K à -114°C soit 159 K nécessite une énergie de 52 kJ / kg $_{méthane}$. L'enthalpie de changement d'état vaut 378,8 kJ / kg $_{méthane}$ ce qui fait au total une énergie frigorifique nécessaire de 430,8 kJ / kg $_{méthane}$. La consommation électrique nécessaire est de :

$$\frac{430,8}{0,33} = 1296\ kJ_{électrique}/kg_{méthane}$$

La compression de 1 à 15 bar nécessite une énergie électrique de 526,5 kJ / kg $_{méthane}$. Au total une énergie de 1822,5 kJ $_{électrique}$ / kg $_{méthane}$ est donc, nécessaire.

Ce procédé de liquéfaction permet, donc, une économie d'énergie électrique de près de 48%. A échelle industrielle, ce procédé permet, donc, d'alléger considérablement la facture énergétique, en la réduisant d'environ la moitié.

Ce procédé, peut également s'appliquer aux gaz provenant de gisements naturels. Dans ce cas-ci il est envisageable de bénéficier de la pression du gisement afin de s'affranchir de l'étape de compression. La liquéfaction peut donc être effectuée à la pression de 15 bar sans préalablement comprimer le méthane.

Avantageusement, la détente de la pression du méthane en provenance du réservoir **11** tampon se fait au plus près du réservoir **2** de transport. Cette disposition trouve son application dans le cas où le réservoir **2** de transport est un méthanier. Il est en effet fréquent dans les installations portuaires que les unités de cryogénisation soient éloignées des terminaux de remplissage des méthaniers. Ainsi le méthane liquide voyage dans des pipelines parfois sur plusieurs kilomètres avant d'être stocké dans le méthanier. Les pipelines sont généralement sous-marins ou enterrés et ils ne sont pas réfrigérés. Par conséquent une partie du méthane transporté se vaporise. L'idée est donc de transporter le méthane à une pression d'environ 15 bar et de le détendre juste avant son entrée dans le méthanier. Ainsi la différence de température entre le méthane et le milieu extérieur n'est pas aussi élevée que si le méthane était transporté à des pressions inférieures.

Une autre solution peut toutefois être envisagée. Il s'agit d'effectuer un étage de détente. En effet pour diverses raisons, il est possible que le transport du méthane à une pression de 15 bar ne soit pas possible. Par conséquent une première détente peut avantageusement être effectuée en sortie du réservoir 11 tampon. La pression du méthane est alors inférieure à 15 bar mais supérieure à la pression de transport. Ainsi le méthane est transporté jusqu'au méthanier avant d'être à nouveau détendu avant son entrée dans celui-ci. Ceci permet d'éviter qu'une fraction trop importante de méthane ne se vaporise dans les pipelines. Globalement le rendement selon cette autre solution qui n'est pas couverte par la présente invention, est amélioré puisque moins de méthane se vaporise, ce méthane n'est alors pas renvoyé vers l'unité de cryogénisation pour être à nouveau liquéfié. L'unité consommera par conséquent moins d'énergie.

## Revendications

1. Procédé de liquéfaction de méthane et de remplissage d'un réservoir de transport par le méthane liquéfié, comprenant :

   - une étape de fourniture de méthane gazeux à un dispositif de liquéfaction (1) comprenant un circuit de liquéfaction,
   - une étape de refroidissement du méthane gazeux à sa température de saturation, dans le dispositif de liquéfaction (1), de sorte à obtenir le méthane liquide,
   - une étape de remplissage du réservoir de transport (2) par le méthane liquéfié, comprenant une étape de détente durant laquelle dans le réservoir de transport (2), une fraction du méthane liquide se transforme en méthane gazeux,
   - l'étape de remplissage du réservoir de transport (2) en méthane liquéfié à une pression de transport, est effectuée à partir d'un réservoir tampon (11) compris dans le circuit de liquéfaction,
   - dans l'étape de remplissage du réservoir de transport (2), le méthane liquide est introduit dans le réservoir de transport (2) en abaissant sa pression à la pression de transport, cette pression de transport étant inférieure ou égale à 8 bar,
   la fraction de méthane liquide qui s'est transformée en méthane gazeux dans le réservoir de transport (2) et la fraction de méthane se vaporisant dans le réservoir tampon étant renvoyées dans le circuit de liquéfaction,
   **caractérisé en ce que**

   - dans l'étape de fourniture du méthane gazeux au dispositif de liquéfaction, le méthane gazeux arrive dans le dispositif de liquéfaction (1) à une température de -100°C,
   - l'étape de refroidissement du méthane gazeux à sa température de saturation est effectuée à une pression égale à 15 bar,
   - une étape de remplissage du réservoir tampon (11) en méthane liquéfié est effectuée, à une pression de 15 bars et une température de -114°C, le méthane gazeux entrant dans le circuit de liquéfaction étant réchauffé jusqu'à une température d'environ 20°C dans un premier échangeur de chaleur (6), puis comprimé à une pression sensiblement égale à 15 bar au moyen d'un compresseur et à une température de 80°C, puis refroidi jusqu'à une température de 20°C dans un deuxième échangeur de chaleur (8), puis refroidi à une température de -90°C dans le premier échangeur de chaleur (6), le méthane gazeux obtenu étant alors refroidi et liquéfié à une température de saturation voisine de -114°C correspondant à la pression de saturation de 15 bar, et le méthane gazeux du réservoir de transport et du réservoir tampon est renvoyée en amont du premier échangeur de chaleur (6).

2. Dispositif (1) de liquéfaction de méthane et de remplissage d'un réservoir (2) de transport par la méthane liquéfié, permettant la mise en œuvre du procédé de liquéfaction du méthane selon la revendication précédente, le dispositif (1) comprenant :

   - un circuit (3) de liquéfaction du méthane initialement gazeux,
   - un circuit (4) de remplissage du méthane liquéfié dans le réservoir (2) de transport,
   - un réservoir (11) tampon compris dans le circuit (3) de liquéfaction ,
   - un circuit de réinjection de la fraction gazeuse de méthane prenant source dans le réservoir de transport (2) et dans le réservoir tampon (11) pour renvoyer le méthane gazeux dans le circuit de liquéfaction de méthane,

   le circuit (4) de remplissage prenant source dans le réservoir (11) tampon et acheminant le méthane liquéfié jusqu'au réservoir (2) de transport, le circuit (3) de liquéfaction comprenant au moins un premier échangeur (6) thermique pour réchauffer le méthane gazeux jusqu'à une température d'environ 20°C, le circuit (3) de liquéfaction comprenant un deuxième échangeur (8) thermique, et un échangeur (9) de liquéfaction, pour liquéfier le méthane gazeux et des moyens pour détendre la pression entre le réservoir (11) tampon et le réservoir (2) de transport, ce dispositif (1) étant **caractérisé en ce que** le circuit (3) de liquéfaction comprend un compresseur (7), ce compresseur (7) étant agencé pour comprimer le méthane gazeux sortant du premier échangeur (6) thermique à une pression sensiblement égale à 15 bar et à une température voisine de 80°C, le deuxième échangeur (8) thermique refroidissant le méthane sortant du compresseur (7) jusqu'à une température de 20°C, le méthane sortant du deuxième échangeur (8) traversant le premier échangeur (6) thermique pour être refroidi à une température de -90°C, le méthane gazeux sortant du deuxième échangeur (8) thermique étant refroidi et liquéfié dans l'échangeur (9) de liquéfaction à une température voisine de -114°C correspondant à une pression de saturation de 15 bar, et le circuit de réinjection de la fraction gazeuse de méthane achemine le méthane gazeux en amont du premier échangeur de chaleur (6).

3. Dispositif selon la revendication 2, **caractérisé en ce que** celui-ci comprend un circuit (5) de réinjection de la fraction gazeuse de méthane, ce circuit (5) de réinjection comprenant des moyens permettant de mesurer la pression dans le réservoir (2) de transport et dans le réservoir (11) tampon, ces moyens se présentant sous la forme de manomètre (21) ou de capteur de pression.

4. Dispositif selon l'une des revendications 2 ou 3, **caractérisé en ce que** le dispositif (1) comprend une unité informatique programmée pour exécuter les étapes du procédé selon la revendication 1.

**Patentansprüche**

1. Verfahren zum Verflüssigen von Methan und Befüllen eines Transportbehälters mit dem verflüssigten Methan, umfassend:

  - einen Schritt des Bereitstellens von gasförmigem Methan an eine Verflüssigungsvorrichtung (1), die einen Verflüssigungskreis umfasst,
  - einen Schritt des Abkühlens des gasförmigen Methans auf seine Sättigungstemperatur in der Verflüssigungsvorrichtung (1), so dass das flüssige Methan erhalten wird,
  - einen Schritt des Befüllens des Transportbehälters (2) mit dem verflüssigten Methan, umfassend einen Entspannungsschritt, bei dem sich im Transportbehälter (2) eine Fraktion des flüssigen Methans in gasförmiges Methan umwandelt,
  - der Schritt des Befüllens des Transportbehälters (2) mit verflüssigtem Methan bei einem Transportdruck aus einem Pufferbehälter (11) erfolgt, der in dem Verflüssigungskreis enthalten ist,
  - im Schritt des Befüllens des Transportbehälters (2) das flüssige Methan in den Transportbehälter (2) eingeleitet wird, indem sein Druck auf den Transportdruck abgesenkt wird, wobei dieser Transportdruck kleiner oder gleich 8 bar beträgt,

  wobei die im Transportbehälter (2) zu Gas umgewandelte flüssige Methanfraktion und die im Pufferbehälter verdampfende Methanfraktion in den Verflüssigungskreis zurückgeführt werden, **dadurch gekennzeichnet, dass**

  - im Schritt des Bereitstellens des gasförmigen Methans an die Verflüssigungsvorrichtung das gasförmige Methan bei einer Temperatur von -100 °C in die Verflüssigungsvorrichtung (1) gelangt,
  - der Schritt des Abkühlens des gasförmigen Methans auf seine Sättigungstemperatur bei einem Druck von gleich 15 bar durchgeführt wird,
  - ein Schritt des Befüllens des Pufferbehälters (11) mit verflüssigtem Methan bei einem Druck von 15 bar und einer Temperatur von -114 °C durchgeführt wird,

  wobei das in den Verflüssigungskreis eintretende gasförmige Methan in einem ersten Wärmetauscher (6) auf eine Temperatur von etwa 20 °C erwärmt wird,

  dann mit einem Kompressor bei einem Druck von im Wesentlichen gleich 15 bar verdichtet und einer Temperatur von 80 °C, dann in einem zweiten Wärmetauscher (8) auf eine Temperatur von 20 °C abgekühlt, dann im ersten Wärmetauscher (6) auf eine Temperatur von -90 °C abgekühlt wird,

  wobei das gewonnene gasförmige Methan dann auf eine Sättigungstemperatur von etwa -114 °C, die dem Sättigungsdruck von 15 bar entspricht, abgekühlt und verflüssigt wird, und das gasförmige Methan aus dem Transportbehälter und dem Pufferbehälter vor den ersten Wärmetauscher (6) zurückgeführt wird.

2. Vorrichtung (1) zum Verflüssigen von Methan und zum Befüllen eines Transportbehälters (2) mit verflüssigtem Methan, die die Durchführung des Verfahrens zum Verflüssigen von Methan nach vorhergehendem Anspruch ermöglicht, wobei die Vorrichtung (1) umfasst:

  - einen Kreis (3) zum Verflüssigen des ursprünglich gasförmigen Methans,
  - einen Kreis (4) zum Füllen des verflüssigten Methans in den Transportbehälter (2),
  - einen Pufferbehälter (11), der im Verflüssigungskreis (3) enthalten ist,
  - einen Kreis zur Wiedereinleitung der gasförmigen Methanfraktion, die aus dem Transportbehälter (2) und dem Pufferbehälter (11) stammt, um das gasförmige Methan in den Methanverflüssigungskreis zurückzuleiten,

  wobei der Füllkreis (4) aus dem Pufferbehälter (11) stammt und das verflüssigte Methan zum Transportbehälter (2) leitet, wobei der Verflüssigungskreis (3) wenigstens einen ersten Wärmetauscher (6) zum Erwärmen des gasförmigen Methans auf eine Temperatur von etwa 20 °C umfasst, wobei der Verflüssigungskreis (3) einen zweiten Wärmetauscher (8) umfasst, und einen Verflüssigungstauscher (9) zum Verflüssigen des gasförmigen Methans und Mittel zur Druckentspannung zwischen dem Pufferbehälter (11) und dem Transportbehälter (2), wobei diese Vorrichtung (1) **dadurch gekennzeichnet ist, dass** der Verflüssigungskreis (3) einen Kompressor (7) umfasst, wobei dieser Kompressor (7) ausgelegt ist, um das aus dem ersten Wärmetauscher (6) austretende gasförmige Methan bei einem Druck zu verdichten, der im Wesentlichen gleich 15 bar beträgt und einer Temperatur von etwa 80 °C, wobei der zweite Wärmetauscher (8) das aus dem Kompressor (7) austretende Methan auf eine Temperatur von 20 °C abkühlt, wobei das aus dem zweiten Wärmetauscher (8) austretende Methan den ersten Wärmetauscher (6) durchquert, um auf eine Temperatur von -90 °C abgekühlt zu werden, wobei das aus dem zweiten Wärmetauscher (8) austretende gasförmige Methan abgekühlt und im Verflüssigungstauscher (9) bei einer Temperatur von etwa -114 °C, die einem Sättigungsdruck von 15 bar entspricht, verflüssigt wird, und der Wiedereinleitungskreis der gasförmigen Methanfraktion das gasförmige Methan vor den ersten Wärmetauscher (6) befördert.

3. Vorrichtung nach Anspruch 2, **dadurch gekennzeichnet, dass** sie einen Wiedereinleitungskreis (5) der gasförmigen Methanfraktion umfasst, wobei dieser Wiedereinleitungskreis (5) Mittel umfasst, die das Messen des Drucks im Transportbehälter (2) und im Pufferbehälter (11) gestatten, wobei diese Mittel in Form eines Manometers (21) oder eines Drucksensors vorliegen.

4. Vorrichtung nach einem der Ansprüche 2 oder 3, **dadurch gekennzeichnet, dass** die Vorrichtung (1) eine Computereinheit umfasst, die programmiert ist, um die Schritte des Verfahrens nach Anspruch 1 auszuführen.


## Claims

1. A method for liquefying methane and filling a transport tank with liquefied methane, comprising:

    - a step of providing gaseous methane to a liquefaction device (1) comprising a liquefaction circuit,
    - a step of cooling the gaseous methane to its saturation temperature, in the liquefaction device (1), so as to obtain liquid methane,
    - a step of filling the transport tank (2) with the liquefied methane, comprising an expansion step during which in the transport tank (2), a fraction of the liquid methane transforms into gaseous methane,
    - the step of filling the transport tank (2) with liquefied methane at a transport pressure, is carried out from a buffer tank (11) included in the liquefaction circuit,
    - in the step of filling the transport tank (2), the liquid methane is introduced into the transport tank (2) by lowering its pressure to the transport pressure, this transport pressure being less than or equal to 8 bar,

    the fraction of liquid methane that has transformed into gaseous methane in the transport tank (2) and the fraction of methane vaporising in the buffer tank being returned to the liquefaction circuit, **characterised in that**

    - in the step of providing the gaseous methane to the liquefaction device, the gaseous methane comes into the liquefaction device (1) at a temperature of -100°C,
    - the step of cooling the gaseous methane to its saturation temperature is carried out at a pressure equal to 15 bar,
    - a step of filling the buffer tank (11) with liquefied methane is carried out, at a pressure of 15 bar and a temperature of -114°C,
    the gaseous methane entering the liquefaction circuit being heated to a temperature of about 20°C in a first heat exchanger (6),
    and then compressed to a pressure substantially equal to 15 bar by means of a compressor and to a temperature of 80°C, and then cooled to a temperature of 20°C in a second heat exchanger (8), and then cooled to a temperature of -90°C in the first heat exchanger (6),
    the gaseous methane obtained being then cooled and liquefied to a saturation temperature of approximately -114°C corresponding to the saturation pressure of 15 bar, and the gaseous methane from the transport tank and the buffer tank is returned upstream of the first heat exchanger (6).

2. A device (1) for liquefying methane and filling a tank (2) for transporting liquefied methane, enabling the methane liquefaction method according to the preceding claim to be implemented, the device (1) comprising:

    - an initially gaseous methane liquefaction circuit (3),
    - a circuit (4) for filling the liquefied methane in the transport tank (2),
    - a buffer tank (11) included in the liquefaction circuit (3),
    - a circuit for reinjecting the gaseous methane fraction sourced from the transport tank (2) and in the buffer tank (11) to return the gaseous methane to the methane liquefaction circuit,

the filling circuit (4) sourced from the buffer tank (11) and conveying the liquefied methane to the transport tank (2), the liquefaction circuit (3) comprising at least one first heat exchanger (6) to heat the gaseous methane to a temperature of about 20°C, the liquefaction circuit (3) comprising a second heat exchanger (8), and a liquefaction exchanger (9), to liquefy the gaseous methane and means for relieving the pressure between the buffer tank (11) and the transport tank (2), this device (1) being **characterised in that** the liquefaction circuit (3) comprises a compressor (7), this compressor (7) being arranged to compress the gaseous methane exiting the first heat exchanger (6) at a pressure substantially equal to 15 bar and at a temperature of about 80°C, the second heat exchanger (8) cooling the methane exiting the compressor (7) to a temperature of 20°C, the methane exiting the second exchanger (8) passing through the first heat exchanger (6) to be cooled to a temperature of - 90°C, the gaseous methane exiting the second heat exchanger (8) being cooled and liquefied in the liquefaction exchanger (9) to a temperature of approximately -114°C corresponding to a saturation pressure of 15 bar, and the circuit for reinjecting the gaseous methane fraction conveys the gaseous methane upstream of the first heat exchanger (6).

3. The device according to claim 2, **characterised in that** it comprises a circuit (5) for reinjecting the gaseous methane fraction, this reinjection circuit (5) comprising means for measuring pressure in the transport tank (2) and in the buffer tank (11), these means being in the form of a pressure gauge (21) or a pressure sensor.

4. The device according to one of claims 2 or 3, **characterised in that** the device (1) comprises a computing unit programmed to execute the steps of the method according to claim 1.

FIG. 1

EP 3 143 349 B1

FIG. 2

EP 3 143 349 B1

FIG. 3a

FIG. 3b

**RÉFÉRENCES CITÉES DANS LA DESCRIPTION**

**Documents brevets cités dans la description**

- US 20130192297 A, JOHN MAK
- AU 2006241566
- US 2012036888 A